**Europäisches Patentamt**

**European Patent Office**

**Office européen des brevets**

(19)

(11) Publication number : **0 464 166 B1**

(12) **EUROPEAN PATENT SPECIFICATION**

(45) Date of publication of patent specification :
23.08.95 Bulletin 95/34

(51) Int. Cl.⁶ : **H04N 7/00, H04N 11/00**

(21) Application number : **91902131.1**

(22) Date of filing : **17.01.91**

(86) International application number :
**PCT/GB91/00074**

(87) International publication number :
**WO 91/11074 25.07.91 Gazette 91/17**

(54) **HIGH DEFINITION TELEVISION CODER/DECODER.**

Divisional application 94111982.8 filed on
17/01/91.

(30) Priority : **19.01.90 GB 9001296**

(43) Date of publication of application :
**08.01.92 Bulletin 92/02**

(45) Publication of the grant of the patent :
**23.08.95 Bulletin 95/34**

(84) Designated Contracting States :
**AT BE CH DE DK ES FR GB GR IT LI LU NL SE**

(56) References cited :
**EP-A- 322 955**
**EP-A- 350 122**
**US-A- 4 675 722**

(73) Proprietor : **BRITISH BROADCASTING**
**CORPORATION**
**Broadcasting House**
**London W1A 1AA (GB)**

(72) Inventor : **KNEE, Michael, James**
**92 Nightingale Road**
**Guilford GU1 1EP (GB)**
Inventor : **WELLS, Nicholas, Dominic**
**17 Wellington Road**
**Brighton BN2 2AB (GB)**

(74) Representative : **Lloyd, Patrick Alexander**
**Desmond et al**
**Reddie & Grose**
**16 Theobalds Road**
**London WC1X 8PL (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 464 166 B1

## Description

This invention relates to high definition television (HDTV) and in particular to a coder and decoder for HDTV signals.

There has been proposed an HDTV coder/decoder (usually referred to as a codec) which consists of six parallel conventional definition (CDTV) bit-rate reduction codecs in parallel (i.e. six sub-codecs). Each codec operates on an appropriate block of picture area and the HDTV codec can operate at 140 Mbit/S. Although this proposal is attractive, it has the disadvantage that if it were to be adopted as a standard, any future implementation would have to consist of six parallel codecs. This standard may not be efficient when the speed of single codecs is increased to the point where an HDTV codec could be implemented with fewer parallel paths.

The present invention aims to overcome the problem with the existing proposal.

Accordingly, there is provided a coder for encoding high definition television (HDTV) signals for transmission, wherein the images to be encoded for transmission are divided into a plurality of stripes, the coder comprising a plurality of sub-coders arranged in parallel, each stripe being processed by an individual sub-coder, and successive stripes being processed by different sub-coders, each sub-coder comprising a storage buffer for holding information from the stripes of the images to be processed by the respective sub-coder, the storage buffers of the parallel sub-coders being so arranged that the transmission multiplex transmits a complete stripe of information from a given sub-coder storage buffer before transmitting information from the storage buffer of the next sub-coder.

The invention also provides a coder for encoding high definition television (HDTV) signals for transmissions, wherein the images to be encoded for transmission are divided into a plurality of stripes, the coder comprising a plurality of sub-coders arranged in parallel, characterised in that each stripe is processed by an individual sub-coder, successive stripes being processed by different sub-coders and by comprising a storage buffer common to all of the sub-coders, the sub-coders being arranged to feed video information to the buffer one stripe at a time.

The invention also provides a decoder for decoding high definition (HDTV) television signals, comprising a plurality of sub-decoders arranged in parallel, each sub-decoder processing video information relating to a stripe of a transmitted image each sub-decoder comprising a storage buffer for storing information from the stripes of the images to be decoded by a respective sub-decoder, the buffers of the parallel sub-decoders being so arranged that a complete stripe of information is received in the buffer of a given sub-decoder before any information is received in the buffer of the next sub-decoder; and means for decoding stripe synchronisation words transmitted with the video data to assign received video data to the correct sub-decoder.

The invention further provides a decoder for decoding high definition (HDTV) television signals, comprising a plurality of sub-decoders arranged in parallel, each decoder processing video information relating to a stripe of a transmitted image, means for decoding stripe synchronisation words transmitted with the video data, and a buffer common to each of the sub-decoders; the sub-decoders being arranged to be fed with received video information from the buffer one stripe at a time, feeding of the video information being controlled by the received stripe synchronisation words.

We have appreciated that to achieve the aim set out, each sub-codec must operate on a stripe of picture rather than a block of picture as suggested in the prior art proposal. Thus, the solution is based on a stripe-by-stripe rather than a block-of-picture by block-of-picture approach.

An embodiment of the invention will now be described with reference to the accompanying drawings in which:

Figure 1 illustrates the stripe-by-stripe coding/ decoding approach;

Figure 2 shows a block diagram of a sub-decoder illustrating how motion compensation may be achieved; and

Figure 3 shows a block diagram of a sub-decoder showing additional delays required to implement stripe-by-stripe decoding.

For the purposes of the following description, an HDTV coder can be considered to consist of N sub-coders in parallel. Sub-coder i will process stripes i, i + N, i + 2N etc within any given frame; that is, every Nth stripe. The clock rate in each sub-coder is inversely proportional to the total number of sub-coders.

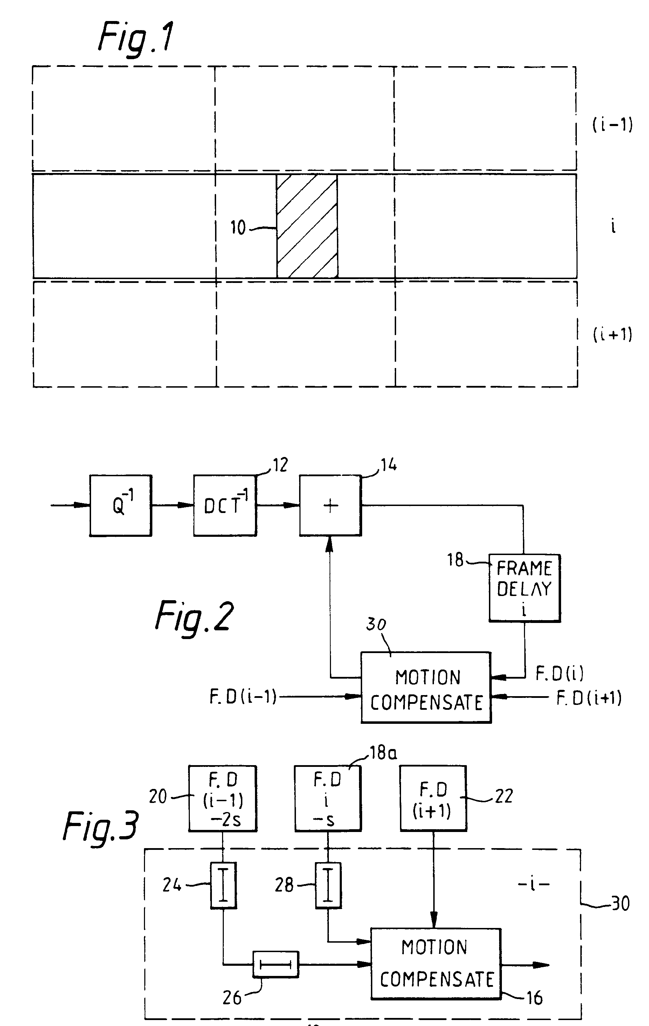

In order that the motion in any given stripe may be measured using block matching techniques, as described for example in our published application GB2188510. The sub-coder for any given stripe will be required to have access to adjacent stripe information from the previous frame coded by the previous and subsequent sub-coders (i-1) and (i+1). This is illustrated in figure 1 in which the stripe processed by sub-coder i is shown by a solid line. The current block the motion of which is to be measured is shaded block 10. By determining the position of this block in the previous frame, a motion vector can be assigned to the block and its position estimated for the next frame. A similar operation must be performed by the sub-decoders.

Figures 2 and 3 show how a sub-decoder will use the additional previous frame inputs. The motion estimation function of each sub-coder will similarly require the same three inputs. In figure 2 the demodulated video signal is decoded using a conventional 17/34 Mbit/S hybrid DCT decoder 12 the output of which is supplied to an adder 14. The other input to the adder is the output from the motion compensation unit 16 for stripe i. This compensation unit has supplied to it the data from stripe i of the previous frame which is delayed by frame delay 18 and similarly data from the adjacent stripes (i-1) and i+1), the stripe data being delayed by respective frame delays 20 and 22 as can be seen from figure 3. Sub-decoder i starts to process a stripe at a time which is staggered by a delay of one stripe interval of the input HDTV signal relative to the start of stripe processing of the adjacent sub-decoder i-1. This delay is compensated for as illustrated in figure 3 by stripe delays 24, 26 and 28 which delay the output of the i-1 stripe frame delay to the motion compensation unit of stripe i by two stripe intervals (delays 24 and 26) and the output of the i stripe frame delay by one stripe interval (delay 28). It should be noted that the delay imposed by each of the frame delays is equal to one frame period less one stripe interval.

It can be seen from figures 1 to 3 that conventional CDTV codecs can be linked comparatively simply to provide an HDTV codec with full motion compensation and estimation. The only modifications required to the CDTV codec architecture occur in the provision of stripe delays in the motion compensation board illustrated by chain dotted line 30 in figure 3.

The previous discussion has considered problems of motion estimation and compensation in a stripe-by-stripe parallel CDTV codec for HDTV. The remaining description considers coder and decoder buffer architecture and operation and decoder resynchronisation.

## CODER

For maximum commonality with the CDTV codec architecture, each sub-coder has its own sub-buffer. Thus, there will be N sub-buffers and sub-buffer i will contain the information for stripes i, i+N, i+2N and so on.

As the number of sub-coders in parallel may be different from the number of parallel sub-decoders, it is necessary that the transmission multiplex transmits a complete stripe of information from a sub-buffer output before switching to the output of the following sub-buffer. For example, stripe i from sub-buffer i must be fully transmitted before the start of transmission of stripe i+l from sub-buffer i+1. The CDTV codecs which form the sub-codecs each have only one coding path and one buffer. The quantisation step for any one stripe is a function of the total sub-buffer occupancy. With a multi sub-buffer architecture, the quantisation step for a given stripe could be chosen to be a function of the appropriate sub-buffer occupancy or a function of the equivalent total sub-buffer occupancy ETBO where:

$$ETBO \stackrel{\sim}{=} \sum_{N} \text{sub-buffer occupancy (i)}$$

The relationship is not exact, for it to be so each sub-coder would have to operate at full speed to complete the coding of one stripe before the following sub-coder commenced the processing of the following stripe.

A better picture quality would be obtained by adapting the quantisation step according to the ETBO. However, this gives rise to problems with individual sub-buffer underflow and overflow. A compromise solution is adopted in which the quantisation step is a function of the individual sub-buffer occupancy and the ETBO.

As well as having to be compatible with a decoder having a different number of sub-decoders, the coder must be compatible with a decoder having a single buffer. In this case, the ETBO has to be less than some specified maximum in order to prevent decoder buffer overflow and underflow.

This requirement is illustrated by the following example. Consider the case in which all the activity in a picture corresponds exactly to only those stripes coded by sub-coder i. In this case the i sub-buffer would be full and the remaining sub-buffers all empty. In such a case, albeit an unlikely one, equivalence to a system with only one coding path and buffer store would only be achieved if each sub-buffer was as large as the buffer in the single buffer coder.

Of course the above example is extreme. The optimum size of the sub-buffer is not as large as that of the single buffer coder and may suffer a small loss of picture quality performance compared with a single-loop coder implementation.

In an alternative embodiment to the multi sub-buffer solution, all sub-coder loops feed into one common buffer store one stripe at a time. However, this embodiment has the disadvantage that the common buffer store

EP 0 464 166 B1

would have to accept a data input at a maximum rate of 32 bit words at 144 MHz clock rate. This embodiment is equivalent to having one coder loop operating at the HDTV clock rate and one coder buffer.

## DECODER

Similarly to the $i^{th}$ sub-coder, in a decoder with N decoder sub-loops or sub-decoder in parallel, stripe i, i+N, i+2N etc. would be directed to sub-buffer i i.e. every $N^{th}$ stripe is decoded by the same sub-decoder. This necessitates pre-buffer decoding of stripe synchronisation words.

Similarly to the sub-coder, the sub-decoder size can be estimated to be equal to the size of the buffer of a single buffer decoder system. Consider the case of a single loop coder (CDTV), a multi-loop decoder and a quiet picture. The coder has to send stuffing bits periodically. If the stuffing bits all coincided only with those stripes sent to a single sub-decoder, then all the transmitted bit rate would be addressed to a single sub-buffer.

Again, an alternative embodiment has a single decoder buffer followed by N decoder sub-loops. As well as suffering from the disadvantage of high bit rate encountered with the corresponding coder, the buffer output would need to provide 32-bit words at a 144 $MH_z$ clock rate, the embodiment has the further disadvantage that post buffer FIFO stores would be required to slow down the data rate for each of the sub-loops.

## DECODER RESYNCHRONISATION

In bit-rate-reduction codecs employing variable bit rate coding for transmission over a fixed bit rate transmission link, it is normal to send the coder buffer occupancy periodically (e.g. every stripe) in order to enable the decoder buffer occupancy to align itself appropriately. Proper alignment of the decoder buffer assures a fixed and known delay through the system.

If the transmission rate is not fixed but varies periodically, the decoder buffer alignment becomes more complicated however it is possible to overcome the problems.

In the embodiment of the present invention described it is not appropriate to send the buffer occupancy for each sub-buffer because a) the number of sub-loops in the coder may be different from the number of loops in the decoder and b) the average transmission rate per channel is highly variable and dependent on the amount of information in each stripe (since the length of time for the transmission of stripe (i) depends on the number of coded bits in this stripe) . Also, it is not possible to resynchronise an individual decoder sub-buffer from a total buffer occupancy figure.

The system embodying the invention overcomes these problems by including an explicit timing reference in the transmitted bit stream which by-passes the coder buffer. This may be done in two ways:

Firstly, a flag may be sent within the transmission multiplex frame indicating the start of a TV frame at the coder. The decoder, which knows the normal delay through the codec buffers can then set the decoder time base appropriately. If greater timing accuracy is required, then the transmission multiplex frame may include space for a pointer to indicate in which subsection of the multiplex frame the TV frame start occurred.

Secondly, a timing reference synchronisation word may be stamped into the video multiplex at the output of the coder buffer. This word may or may not be stripped from the video data as required before it enters the decoder buffer and used to set the decoder timebase.

At start up or after loss of synchronisation because of transmission errors, the decoder operates the following procedure:

i) The timing reference at the input to the decoder buffer is detected and the decoder timebase set, giving stripe and field/frame pulses etc;

ii) A stripe is pulled from the first buffer and the stripe number examined;

iii) If this number is lower than required by the timebase further stripes are pulled from the buffers (in sequence) until the stripe number is correct:

iv) If the number is greater than required, decoding of the stripe is delayed until the appropriate time as directed by the timebase;

v) A check is made to ensure that the frame sync pulse timing is correct. (The frame sync pulses is numbered to match the number of the timing reference with the number of the frame synchronising word which is part of the video MUX and which has travelled through the buffer stores).

Decoder resynchronisation is only required if there is a loss of multiplex framing because of transmission errors or because of a non-sync cut in the video source.

The embodiment described provide flexible architecture for an HDTV bit-rate reduction docoder. A coder/decoder may be constructed from any number of parallel sub-coders/decoders so long as the following four conditions are met.

Firstly, the sub-coders/decoders must operate on a stripe-by stripe rather than block-by-block basis;

4

Secondly, the motion estimation/compensation function of an individual sub-coder/decoder must have access to the information in adjacent stripes;

Thirdly, resynchronisation of the decoder must be achieved independently of the buffer stores, for example by inserting additional timing reference information into the transmitted bit stream; and

Fourthly, the equivalent total buffer occupancy of the coder must be monitored and kept lower than a pre-defined maximum value.

The embodiment described has the advantage that a transmission standard can be defined which allows coders and decoders to be constructed with any number of units in parallel. As the speed of integrated circuits increases it will become possible to build equipment according to the standard using single loop/buffer architectures.

Moreover, the parallel sub-coder/decoder arrangement may be extended to deal with sequentially scanned signals.

## Claims

1. A coder for encoding high definition television (HDTV) signals for transmission, wherein the images to be encoded for transmission are divided into a plurality of stripes ($(i-1)$, $i$, $(i+1)$), the coder comprising a plurality of sub-coders arranged in parallel, each stripe being processed by an individual sub-coder, and successive stripes being processed by different sub-coders, each sub-coder comprising a storage buffer for holding information from the stripes of the images to be processed by the respective sub-coder, the storage buffers of the parallel sub-coders being so arranged that the transmission multiplex transmits a complete stripe of information from a given sub-coder storage buffer before transmitting information from the storage buffer of the next sub-coder.

2. A coder according to claim 1, comprising N sub-coders characterised in that every Nth stripe is coded by the same sub-coder.

3. A coder according to claim 1 or 2, comprising for each sub-coder motion compensation and estimation means (30) for measuring the motion of areas of a stripe and coding each area according to the measured motion, characterised by means (24, 26 28) for providing the sub-coder coding a given stripe with information from adjacent stripes to enable operation of the motion compensation and estimation means.

4. A coder according to claim 3, characterised by delay means for providing the motion compensation and estimation means for a given stripe with video information delayed by a video frame period from the adjacent stripes and that stripe.

5. A coder according to claim 4, characterised in that the delay means (24, 26) includes means for delaying provision of video information from the previously processed adjacent stripe to the motion compensation and estimation means by two stripe periods and means (28) for delaying provision of video information from the previous frame of the stripe to be processed to the motion compensation and estimation means by a single stripe period, the total delays of each stripe to the motion compensation and estimation means being equal to a video frame period.

6. A coder according to any of claims 1 to 5, characterised in that each of the sub-coders operates at a clock rate inversely proportional to the total number of sub-coders.

7. A coder according to any of claims 1 to 6, wherein each of the sub-coders is a conventional definition television CDTV coder.

8. A coder according to any preceding claim, characterised in that the quantisation step for each stripe is a function of the equivalent total buffer occupancy of all the buffers of the sub-coder and the individual sub-buffer occupancy of the sub-coders.

9. A coder according to claim 8, characterised by comprising means for monitoring the equivalent total buffer occupancy and means for holding the equivalent total buffer occupancy below a pre-defined maximum value.

10. A coder for encoding high definition television (HDTV) signals for transmission, wherein the images to be encoded for transmission are divided into a plurality of stripes, the coder comprising a plurality of sub-coders arranged in parallel, characterised in that each stripe is processed by an individual sub-coder, successive stripes being processed by different sub-coders and by comprising a storage buffer common to all of the sub-coders, the sub-coders being arranged to feed video information to the buffer one stripe at a time.

11. A transmitter for transmitting high definition television signals comprising a coder according to any preceding claim and means for transmitting with the coded stripes of video information an explicit timing reference.

12. Apparatus according to claim 11 wherein the absolute timing reference is a flag transmitted within the transmission multiplex frame indicating the start of a television frame at the coder.

13. A transmitter according to claim 12 wherein the explicit timing reference comprises a means of inserting explicit timing reference information into the video multiplex at the output of the coder buffer.

14. Apparatus according to any of claims 11 to 13 wherein a stripe synchronisation word is transmitted with the coded stripes of video information.

15. A decoder for decoding high definition (HDTV) television signals, comprising a plurality of sub-decoders arranged in parallel, each sub-decoder processing video information relating to a stripe of a transmitted image, each sub-decoder comprising a storage buffer for storing information from the stripes of the images to be decoded by a respective sub-decoder, the buffers of the parallel sub-decoders being so arranged that a complete stripe of information is received in the buffer of a given sub-decoder before any information is received in the buffer of the next sub-decoder; and means for decoding stripe synchronisation words transmitted with the video data to assign received video data to the correct sub-decoder.

16. A decoder according to claim 15, comprising for each sub-decoder motion, compensation means for decoding the received video data corresponding to areas of a stripe according to the degree of movement of each area, characterised by means for providing the sub-decoder for a given stripe with information from adjacent stripes to enable operation of the motion compensation means.

17. A decoder according to claim 16, characterised by delay means for providing the motion compensation for a sub-decoder decoding a given stripe with received video information from adjacent stripes, the decoder further comprising means for delaying provision of the video information from the adjacent stripes by a video frame period.

18. A decoder according to claim 17, characterised in that the delay means includes means for delaying provision of video information from the previously decoded adjacent stripe to the motion compensation means by two stripe periods, and means for delaying provision of video information contained in the previous frame of the stripe to be processed to the motion compensation means by a delay of one stripe period, the total delay of information from each stripe to the motion compensation means being equal to one video frame period.

19. A decoder according to any of claims 15 to 18 comprising N sub-decoders, characterised in that every Nth stripe is decoded by the same sub-decoder.

20. A decoder according to any of claims 15 to 19 characterised in that each sub-decoder operates at a clock rate inversely proportional to the total number of sub-decoders.

21. A decoder according to any of claims 15 to 20 characterised in that each of the sub-decoders is a CDTV decoder.

22. A decoder for decoding high definition (HDTV) television signals, comprising a plurality of sub-decoders arranged in parallel, each decoder processing video information relating to a stripe of a transmitted image, means for decoding stripe synchronisation words transmitted with the video data, and a buffer common to each of the sub-decoders; the sub-decoders being arranged to be fed with received video information from the buffer one stripe at a time, feeding of the video information being controlled by the received stripe synchronisation words.

23. A decoder according to any of claims 15 to 22, comprising means for receiving an explicit timing reference transmitted with the encoded video information.

24. A decoder according to claim 23 wherein the means for receiving the explicit timing reference comprises means for receiving a flag transmitted within the transmission multiplex frame.

25. A decoder according to claim 23 wherein the means for receiving an explicit timing reference comprises means for receiving a timing reference information included in the video multiplex and means for stripping the timing reference synchronisation word from the video data is required before the video data enters the decoder buffer.

26. A video signal transmission system comprising at a transmitter:
a high definition video signal source;
a coder for coding the video signal for transmission and comprising a plurality of sub-coders arranged in parallel, means for dividing images to be coded into a plurality of stripes, each stripe being coded by an individual sub-coder and successive stripes being coded by different sub-coders;
means for transmitting with the encoded video data an explicit timing reference and stripe synchronisation words; and at a receiver;
means for receiving the transmitted coded high definition video signal, timing reference and stripe synchronisation words, a decoder for decoding the received video signal for display and comprising a plurality of sub-decoders arranged in parallel, means for assigning stripes of received video information to individual sub-decoders in accordance with the received stripe synchronisation words, successive received stripes being assigned to different sub-decoders;
wherein the number of sub-decoders in the decoder is independent of the number of sub-coders in the coder.

## Patentansprüche

1. Coder für die Codierung von Signalen für hochauflösendes Fernsehen (HDTV) für die Übertragung, in welchem die für die Übertragung zu codierenden Bilder in mehrere Streifen ( (i-1), i, (i+1) ) aufgeteilt werden, wobei der Coder mehrere Subcoder, die parallel angeordnet sind, aufweist, jeder Streifen durch einen individuellen Subcoder verarbeitet wird und aufeinanderfolgende Streifen durch verschiedene Subcoder verarbeitet werden, jeder Subcoder einen Speicherpuffer umfaßt, der Information von den vom jeweiligen Subcoder zu verarbeitenden Streifen der Bilder hält, die Speicherpuffer paralleler Subcoder so angeordnet sind, daß das Übertragungsmultiplex einen vollständigen Informationsstreifen von einem gegebenen Subcoder-Speicherpuffer vor Übertragen von Information aus dem Speicherpuffer des nächsten Subcoders überträgt.

2. Coder nach Anspruch 1, aufweisend N-Subcoder,
**dadurch gekennzeichnet,**
daß jeder Nte Streifen durch denselben Subcoder codiert ist.

3. Coder nach Anspruch 1 oder 2, aufweisend für jeden Subcoder eine Bewegungskompensations- und Abschätzungseinrichtung (30) zum Messen der Bewegung von Bereichen eines Streifens und zum Codieren jedes Bereichs gemäß der gemessenen Bewegung,
**gekennzeichnet durch**
eine Einrichtung (24, 26, 28), die den einen gegebenen Streifen codierenden Subcoder mit Information von angrenzenden Streifen versorgt, um die Operation der Bewegungskompensations- und Abschätzungseinrichtung zu ermöglichen.

4. Codierer nach Anspruch 3,
**gekennzeichnet durch**
eine Verzögerungseinrichtung, die die Bewegungskompensations- und Abschätzungseinrichtung für einen gegebenen Streifen mit Videoinformation versorgt, die durch eine Videobildperiode von den angrenzenden Streifen und diesem Streifen verzögert ist.

5. Coder nach Anspruch 4,
   **dadurch gekennzeichnet,**
   daß die Verzögerungseinrichtung (24, 26) eine Einrichtung aufweist für eine verzögernde Lieferung von Videoinformation vom zuvor verarbeiteten angrenzenden Streifen an die Bewegungskompensations- und Abschätzungs einrichtung um zwei Streifenperioden und eine Einrichtung (28) zur verzögernden Lieferung von Videoinformation vom vorigen Bild des zu verarbeitenden Streifens an die Bewegungskompensations- und Abschätzungseinrichtung um eine einzelne Streifenperiode, wobei die gesamten Verzögerungen jedes Streifens für die Bewegungskompensations- und Abschätzungseinrichtung gleich einer Videobildperiode entsprechen.

6. Coder nach einem der Ansprüche 1 bis 5,
   **dadurch gekennzeichnet,**
   daß jeder der Subcoder mit einer Taktrate invers proportional zur Gesamtzahl von Subcodern arbeitet.

7. Coder nach einem der Ansprüche 1 bis 6, in welchem jeder der Subcoder ein Coder für konventionell auflösendes Fernsehen (CDTV) ist.

8. Coder nach einem vorhergehenden Anspruch,
   **dadurch gekennzeichnet,**
   daß der Quantisierungsschritt für jeden Streifen eine Funktion der äquivalenten Gesamtpufferbelegung sämtlicher Puffer der Subcoder und der individuellen Subpufferbelegung der Subcoder ist.

9. Coder nach Anspruch 8,
   **gekennzeichnet durch**
   das Umfassen von einer Einrichtung zur Überwachung der äquivalenten Gesamtpufferbelegung und einer Einrichtung zum Halten der äquivalenten Gesamtpufferbelegung unter einem vordefinierten Maximumwert.

10. Coder für die Codierung von Signalen für hochauflösendes Fernsehen (HDTV) für die Übertragung, in welchem die für die Übertragung zu codierenden Bilder in mehrere Streifen aufgeteilt werden, wobei der Coder mehrere Subcoder aufweist, die parallel angeordnet sind,
    **dadurch gekennzeichnet,**
    daß jeder Streifen durch einen individuellen Subcoder verarbeitet wird, aufeinanderfolgende Streifen durch verschiedene Subcoder verarbeitet werden, und daß er einen sämtlichen Subcodern gemeinsamen Speicherpuffer aufweist, wobei die Subcoder so ausgelegt sind, daß sie dem Puffer Videoinformation mit einem Streifen zugleich zuführen.

11. Übertrager zum Übertragen von Signalen für hochauflösendes Fernsehen, aufweisend einen Coder nach einem vorhergehenden Anspruch und eine Einrichtung zum Übertragen eines expliziten Zeitgeberbezugs mit den codierten Videoinformationsstreifen.

12. Vorrichtung nach Anspruch 11, in welcher der absolute Zeitgeberbezug ein innerhalb des Übertragungsmultiplexrahmens übertragenes Kennzeichen ist, das den Beginn eines Fernsehbildes am Coder anzeigt.

13. Übertrager nach Anspruch 12, in welchem der explizite Zeitgeberbezug eine Einrichtung zum Einfügen von expliziter Zeitgeberinformation in das Videomultiplex am Ausgang des Codierpuffers umfaßt.

14. Vorrichtung nach einem der Ansprüche 11 bis 13, in welcher ein Streifensynchronisationswort mit den codierten Videoinformationsstreifen übertragen wird.

15. Decoder zum Decodieren von Signalen für hochauflösendes Fernsehen (HDTV), aufweisend mehrere Subdecoder, die parallel angeordnet sind, wobei jeder Subdecoder Videoinformation verarbeitet, die sich auf einen Streifen eines übertragenen Bildes bezieht, jeder Subdecoder einen Speicherpuffer zum Speichern von Information von den Streifen der Bilder umfaßt, die durch einen jeweiligen Subdecoder zu decodieren sind, die Puffer der parallelen Subdecoder so angeordnet sind, daß ein vollständiger Informationsstreifen im Puffer eines gegebenen Subdecoders empfangen wird, bevor jedwede Information im Puffer des nächsten Subdecoders empfangen wird; und eine Einrichtung zum Decodieren von Streifensynchronisationswörtern, die mit den Videodaten übertragen werden, zur Zuweisung von Videodaten zum korrekten Subdecoder.

16. Decoder nach Anspruch 15, aufweisend für jede Subdecoderbewegung eine Kompensationseinrichtung zum Decodieren der empfangenen Videodaten entsprechend Bereichen eines Streifens gemäß dem Grad der Bewegung jedes Bereichs,
**gekennzeichnet durch**
eine Einrichtung zum Versorgen des Subdecoders für einen gegebenen Streifen mit Information aus angrenzenden Streifen, um die Operation der Bewegungskompensationseinrichtung zu ermöglichen,

17. Decoder nach Anspruch 16,
**gekennzeichnet durch**
eine Verzögerungseinrichtung, die die Bewegungskompensation für einen einen gegebenen Streifen decodierenden Subdecoder mit empfangener Videoinformation von angrenzenden Streifen versorgt, wobei der Decoder ferner eine Einrichtung aufweist, die eine Verzögerung der Videoinformation von den angrenzenden Streifen um eine Videobildperiode vorsieht.

18. Decoder nach Anspruch 17,
**dadurch gekennzeichnet,**
daß die Verzögerungseinrichtung eine Einrichtung umfaßt zur verzögernden Lieferung von Videoinformation vom zuvor decodierten angrenzenden Streifen an die Bewegungskompensationseinrichtung um zwei Streifenperioden und eine Einrichtung aufweist zur verzögernden Lieferung von Videoinformation, die im vorigen Bild des Streifens, der zu verarbeiten ist, enthalten ist, an die Bewegungskompensationseinrichtung um eine Verzögerung einer Streifenperiode, wobei die Gesamtverzögerung der Information von jedem Streifen für die Bewegungskompensationseinrichtung gleich einer Videobildperiode entspricht.

19. Decoder nach einem der Ansprüche 15 bis 18, aufweisend N-Subdecoder,
**dadurch gekennzeichnet,**
daß jeder Nte Streifen durch denselben Subdecoder decodiert wird.

20. Decoder nach einem der Ansprüche 15 bis 19,
**dadurch gekennzeichnet,**
daß jeder Subdecoder mit einer zur Gesamtzahl von Subdecodern invers proportionalen Taktrate arbeitet.

21. Decoder nach einem der Ansprüche 15 bis 20,
**dadurch gekennzeichnet,**
daß jeder der Subdecoder ein CDTV-Decoder ist.

22. Decoder zum Decodieren von Signalen für hochauflösendes Fernsehen (HDTV), aufweisend mehrere Subdecoder, die parallel angeordnet sind, wobei jeder Decoder Videoinformation verarbeitet, die sich auf einen Streifen eines übertragenen Bildes bezieht, eine Einrichtung zum Decodieren von Streifensynchronisationswörtern, die mit den Videodaten übertragen werden, und einen jedem der Subdecoder gemeinsamen Puffer; wobei die Subdecoder so angeordnet sind, daß ihnen empfangene Videoinformation vom Puffer mit einem Streifen gleichzeitig zugeführt wird, wobei die Zuführung der Videoinformation durch die empfangenen Streifensynchronisationswörter gesteuert wird.

23. Decoder nach einem der Ansprüche 15 bis 22, aufweisend eine Einrichtung, die einen mit der codierten Videoinformation übertragenen expliziten Zeitgeberbezug empfängt.

24. Decoder nach Anspruch 23, in welchem die Einrichtung zum Empfangen des expliziten Zeitgeberbezugs eine Einrichtung umfaßt, die ein innerhalb des Übertragungsmultiplexrahmens übertragenes Kennzeichen empfängt.

25. Decoder nach Anspruch 23, in welchem die Einrichtung zum Empfangen eines expliziten Zeitgeberbezugs eine Einrichtung umfaßt, die eine Zeitgeberbezugsinformation, welche im Videomultiplex enthalten ist, empfängt, und in welchem eine Einrichtung zum Abziehen des Zeitgeberbezugs-Synchronisationsworts aus den Videodaten, bevor die Videodaten in den Decoderpuffer eingegeben werden, erforderlich ist.

26. Videosignalübertragungssystem, aufweisend an einem Übertrager:

eine hochauflösende Videosignalquelle;

einen Coder zum Codieren des Videosignals für die Übertragung und aufweisend mehrere Subcoder, die parallel angeordnet sind, eine Einrichtung zum Aufteilen zu codierender Bilder in mehrere Streifen, wobei jeder Streifen von einem individuellen Subcoder codiert wird und aufeinanderfolgende Streifen durch verschiedene Subcoder codiert werden;

eine Einrichtung zum Ubertragen eines expliziten Zeitgeberbezugs und von Streifensynchronisationswörtern mit den codierten Videodaten; und an einen Empfänger:

eine Einrichtung zum Empfangen des übertragenen codierten hochauflösenden Videosignals, Zeitgeberbezugs- und Streifensynchronisationswörtern, einen Decoder zum Decodieren des empfangenen Videosignals für eine Darstellung und aufweisend mehrere Subdecoder, die parallel angeordnet sind, eine Einrichtung, die Streifen empfangener Videoinformation individuellen Subdecodern gemäß der empfangenen Streifensynchronisationswörter zuweist, wobei aufeinanderfolgende empfangene Streifen verschiedenen Subdecodern zugewiesen werden;

worin die Anzahl von Subdecodern im Decoder unabhängig von der Anzahl von Subcodern im Codierer ist.

**Revendications**

1. Un codeur destiné à encoder des signaux de télévision à haute définition (HDTV) en vue de leur transmission, dans lequel les images à encoder pour transmission sont divisées en une série de bandes ((i - 1), i, (i + 1)), le codeur comprenant une série de sous-codeurs agencés en parallèle, chaque bande étant traitée par un sous-codeur individuel, et des bandes successives étant traitées par des sous-codeurs différents, chaque sous-codeur comprenant un tampon de mémorisation pour retenir une information qui vient de bandes des images à traiter par le sous-codeur respectif, les tampons de mémorisation des sous-codeurs parallèles étant disposés d'une manière telle que la transmission multiplex transmet une bande complète d'informations qui vient d'un tampon de mémorisation d'un sous-codeur donné avant de transmettre une information qui vient d'un tampon de mémorisation du sous-codeur suivant.

2. Un codeur selon la revendication 1, comprenant N sous-codeurs caractérisé en ce qu'une bande toutes les N bandes est codée par le même sous-codeur.

3. Un codeur selon la revendication 1 ou 2, comprenant pour chaque sous-codeur un moyen de compensation et d'estimation (30) de mouvement pour mesurer le mouvement de zones d'une bande et pour coder chaque zone en fonction du mouvement mesuré, caractérisé par un moyen (24, 26, 28) destiné à amener, à un sous-codeur qui code une bande donnée, une information provenant de bandes adjacentes afin de permettre le fonctionnement du moyen de compensation et d'estimation de mouvement.

4. Un codeur selon la revendication 3, caractérisé par un moyen de retard qui permet d'amener, au moyen de compensation d'estimation de mouvement d'une bande donnée, une information vidéo retardée d'une période de trame vidéo provenant des bandes adjacentes et de cette bande.

5. Un codeur selon la revendication 4, caractérisé en ce que le moyen de retard (24, 26) inclut un moyen destiné à retarder de deux périodes de bande l'amenée, au moyen de compensation et d'estimation de mouvement, de l'information vidéo qui vient de la bande adjacente traitée précédemment et un moyen (28) destiné à retarder d'une seule période de bande l'amenée, au moyen de compensation et d'estimation de mouvement, de l'information vidéo, qui vient de la trame précédant la bande à traiter, les retards totaux de chaque bande au moyen de compensation et d'estimation de mouvement étant égaux à une période de trame vidéo.

6. Un codeur selon l'une quelconque des revendications 1 à 5, caractérisé en ce que chacun des sous-codeurs fonctionne à une fréquence d'horloge qui est inversement proportionnelle au nombre total de sous-codeurs.

7. Un codeur selon l'une quelconque des revendications 1 à 6 dans lequel chacun des sous-codeurs est un codeur de télévision à définition classique, ou codeur CDTV.

8. Un codeur selon une revendication précédente quelconque caractérisé en ce que l'étape de quantification de chaque bande est fonction de l'occupation équivalente totale de tampon de tous les tampons du sous-codeur et de l'occupation de sous-tampons individuels des sous-codeurs.

9. Un codeur selon la revendication 8, caractérisé en ce qu'il comprend des moyens de surveillance de l'occupation équivalente totale de tampon et un moyen de maintien de l'occupation équivalente totale de tampon au-dessous d'une valeur maximale prédéfinie.

10. Un codeur destiné à encoder des signaux de télévision à haute définition (HDTV) en vue de leur transmission, dans lequel les images à encoder pour transmission sont divisées en une série de bandes, le codeur comprenant une série de sous-codeurs agencés en parallèle, caractérisé en ce que chaque bande est traitée par sous-codeur individuel, des bandes successives étant traitées par des sous-codeurs différents, et en ce qu'il comprend un tampon de mémorisation commun à tous les sous-codeurs, les sous-codeurs étant agencés de façon à amener au tampon l'information vidéo une bande à la fois.

11. Un transmetteur destiné à transmettre des signaux de télévision à haute définition comprenant un codeur selon une revendication précédente quelconque et un moyen de transmission d'une référence explicite de synchronisation avec les bandes codées d'information vidéo.

12. Appareil selon la revendication 11 dans lequel la référence absolue de synchronisation est un drapeau, transmis à l'intérieur de la trame multiplex de transmission, qui indique au codeur le début d'une trame de télévision.

13. Un transmetteur selon la revendication 12 dans lequel la référence explicite de synchronisation comprend un moyen d'insertion, dans le multiplex vidéo à la sortie du tampon de codeur, d'une information explicite de référence de synchronisation.

14. Appareil selon l'une quelconque des revendications 11 à 13 dans lequel un mot de synchronisation de bande est transmis avec les bandes codées d'information vidéo.

15. Un décodeur destiné à décoder des signaux de télévision à haute définition (HDTV) comprenant une série de sous-décodeurs agencés en parallèle, chaque sous-décodeur traitant une information vidéo concernant une bande d'une image transmise, chaque sous-décodeur comprenant un tampon de mémorisation pour mémoriser une information qui vient des bandes des images à décoder par un sous-décodeur respectif, les tampons des sous-décodeurs parallèles étant agencés de façon qu'une bande complète d'information soit reçue dans le tampon d'un sous-décodeur donné avant que toute information ne soit reçue dans le tampon du sous-décodeur suivant; et un moyen de décodage de mots de synchronisation de bande transmis avec la donnée vidéo afin d'assigner au sous-décodeur correct une donnée vidéo reçu.

16. Un décodeur selon la revendication 15 comprenant, pour chaque mouvement de sous-décodeur, un moyen de compensation pour décoder la donnée vidéo reçue qui correspond à des zones d'une bande en fonction du degré de mouvement de chaque zone, caractérisé par un moyen destiné à amener au sous-décodeur, pour une bande donnée, une information provenant de bandes adjacentes afin de permettre le fonctionnement du moyen de compensation de mouvement.

17. Un décodeur selon la revendication 16, caractérisé par un moyen de retard destiné à amener au moyen de compensation, pour un sous-décodeur qui décode une bande donnée, une information vidéo reçue qui vient de bandes adjacentes, le décodeur comprenant en outre un moyen destiné à retarder, d'une période de trame vidéo, l'amenée de l'information vidéo provenant des bandes adjacentes.

18. Un décodeur selon la revendication 17, caractérisé en ce que le moyen de retard inclut un moyen destiné à retarder de deux périodes de bande l'amenée, au moyen de compensation de mouvement, de l'information vidéo qui vient de la bande adjacente décodée précédemment et un moyen destiné à retarder d'une seule période de bande l'amenée, au moyen de compensation de mouvement, de l'information vidéo contenue dans la trame précédant la bande à traiter, le retard total de l'information de chaque bande au moyen de compensation de mouvement étant égal à une période de trame vidéo.

**19.** Un décodeur selon l'une quelconque des revendications 15 à 18, comprenant N sous-décodeurs caractérisé en ce qu'une bande toutes les N bandes est décodée par le même sous-décodeur.

**20.** Un décodeur selon l'une quelconque des revendications 15 à 19, caractérisé en ce que chacun des sous-décodeurs fonctionne à une fréquence d'horloge qui est inversement proportionnelle au nombre total de sous-décodeurs.

**21.** Un décodeur selon l'une quelconque des revendications 15 à 20 dans lequel chacun des sous-décodeurs est un décodeur de télévision à définition classique, ou décodeur CDTV.

**22.** Un décodeur destiné à décoder des signaux de télévision à haute définition (HDTV) comprenant une série de sous-décodeurs agencés en parallèle, chaque décodeur traitant une information vidéo concernant une bande d'une image transmise, un moyen de décodage de mots de synchronisation de bande transmis avec la donnée vidéo, et un tampon commun à chacun des sous-décodeurs; les sous-décodeurs étant agencés d'une manière telle que l'information vidéo reçue leur est amenée du tampon une bande à la fois, l'amenée de l'information vidéo étant commandée par les mots de synchronisation de bande reçus.

**23.** Un décodeur selon l'une quelconque des revendications 15 à 22 comprenant un moyen de réception d'une référence explicite de synchronisation transmise avec l'information vidéo encodée.

**24.** Un décodeur selon la revendication 23 dans lequel le moyen de réception d'une référence explicite de synchronisation comprend un moyen de réception d'un drapeau, transmis à l'intérieur de la trame multiplex de transmission.

**25.** Un décodeur selon la revendication 23 dans lequel le moyen de réception d'une référence explicite de synchronisation comprend un moyen de réception d'une information de référence de synchronisation incluse dans le multiplex vidéo, et il faut un moyen destiné à éliminer de la donnée vidéo le mot de synchronisation de référence de synchronisation avant que la donnée vidéo n'entre dans le tampon du décodeur.

**26.** Un système de transmission de signaux vidéo comprenant à un transmetteur:
une source de signaux vidéo à haute définition;
un codeur destiné à coder le signal vidéo en vue de sa transmission et comprenant une série de sous-codeurs agencés en parallèle, un moyen de division des images à coder en une série de bandes, chaque bande étant codée par un sous-codeur individuel et des bandes successives étant traitées par des sous-codeurs différents,
un moyen destiné à transmettre, avec la donnée vidéo encodée, un référence explicite de synchronisation et des mots de synchronisation de bande; et à un récepteur:
un moyen destiné à recevoir le signal vidéo à haute définition, une référence de synchronisation et des mots de synchronisation de bande, tous codés transmis, un décodeur destiné à décoder le signal vidéo reçu de manière à l'afficher et comprenant une série de sous-décodeurs agencés en parallèle, un moyen d'assignation de bandes d'information vidéo reçue à des sous-décodeurs individuels conformément aux mots de synchronisation de bande reçus, des bandes successives reçues étant assignées à des sous-décodeurs différents;
dans lequel le nombre de sous-décodeurs du décoder est indépendant du nombre de sous-codeurs dans le codeur.

Fig.1

Fig.2

Fig.3

13